# EUROPEAN PATENT SPECIFICATION

(11) **EP 3 567 691 B1**
(45) Date of publication and mention of the grant of the patent: **30.06.2021**
(21) Application number: 19164044.0
(22) Date of filing: 20.03.2019
(51) Int. Cl.: H02J 3/32, H02J 3/38, H02J 7/00, H02J 7/34, H02J 7/02

(54) **COMPOSITE POWER STORAGE SYSTEM AND POWER STORAGE METHOD**
ZUSAMMENGESETZTES ENERGIESPEICHERSYSTEM UND ENERGIESPEICHERVERFAHREN
SYSTÈME DE STOCKAGE D'ÉNERGIE COMPOSITE ET PROCÉDÉ DE STOCKAGE D'ÉNERGIE

(30) Priority: 08.05.2018 JP 2018089800
(43) Date of publication of application: 13.11.2019
(73) Proprietor: Hitachi, Ltd., Tokyo 100-8280 (JP)
(72) Inventor: USAMI, Takashi, Tokyo, 100-8280 (JP); KONNO, Hiromichi, Tokyo, 100-8280 (JP); MORISHIGE, Takafumi, Tokyo, 100-8280 (JP)
(74) Representative: MERH-IP Matias Erny Reichl Hoffmann Patentanwälte PartG mbB

(56) References cited:
- WO-A1-2016/029128
- JP-B2- 6 289 423
- US-A1- 2015 303 719
- US-A1- 2017 256 945

## Description

### BACKGROUND OF THE INVENTION

### 1. Field of the Invention

The present invention relates to a composite power storage system and a power storage method.

### 2. Description of Related Art

Currently, most of power supplied by power companies is generated by burning fossil fuels such as oil and coal, thereby generating steam at high temperature and high pressure and rotating a steam turbine. In recent years, however, from the consideration of the environment, power generation systems using natural energy (photovoltaic power generation, wind power generation, and the like) are increasing.

In these power generation systems using natural energies, there are many instances where the power generation situation is unstable, and the storage batteries are connected to the power supply to smooth the power which is output to the power grid. In other words, a large-sized battery system in which a plurality of storage batteries are connected in series and in parallel is provided for a system that generates power using natural energy, thereby smoothing power output to the power grid.

For connecting a plurality of storage batteries, a composite battery system has been developed in which a capacity-type battery group having a large capacity and a small output and a power-type battery group having a higher output value with respect to capacity (output/capacity) compared to a capacity-type power storage device are connected in parallel and these two types of battery groups are appropriately combined and used. For example, Japanese Patent No. 5887431 (PTL 1) discloses a composite battery system in which a capacity-type battery group having a large capacity and a small output and a power-type battery group having a high output value with respect to capacity (output/capacity) are connected in parallel to provide an optimal output capacity ratio system in application.

In addition, JP-A-2017-139843 (PTL 2) discloses a power storage system in which a first power storage device and a second power storage device are connected in parallel with each other, and the first power storage device is discharged or charged according to a power supply demand and a power storage demand, and the second power storage device is discharged or charged according to the remaining capacity of the first power storage device.

As described in PTL 2, it is possible to appropriately adjust the state of charge (SOC: Ratio of the remaining charge amount to the charge capacity) of the power storage device by controlling a pair of power storage devices.

In the composite battery system described in PTL 1, since the charge/discharge command for a composite battery system is transmitted to a plurality of storage batteries for power distribution, when the charge/discharge command is biased toward charging or discharging, the SOC of a battery having a small capacity may reach the upper limit or the lower limit to cause a possibility that utilization rate of the facility is lowered.

Meanwhile, in the power storage system described in PTL 2, the power storage system is configured to be connected to the outside through a DC/AC inverter, and each of the power storage devices is connected to the DC/AC inverter in parallel. Therefore, the maximum output to the outside of the power storage system is fixed, and it is not easy to change the configuration of the power storage device. In addition, since the second power storage device operates only when the SOC of the first power storage device is out of the set range, the facility utilization rate of the entire system may be lowered. Therefore, it is not considered that the composite system in the related art which stores power always provides optimal use of the system, and rather, there is room for improvement. Furthermore, PTL 3 (US 2015/303719 A1) discloses a battery combined system wherein a system operation rate is improved by reducing a frequency at which an SOC of the power type battery reaches an upper limit or a lower. This prior art is reflected by the preamble of claims 1 and 7.

### SUMMARY OF THE INVENTION

The present invention has been made in order to solve such a problem and an object thereof to provide a composite power storage system according to claim 1 and a power storage method according to claim 7 capable of efficiently storing power by simultaneously achieving both electricity storage at high energy density and electricity storage at high power density.

In order to solve the above problem, for example, the configuration described in the claims is adopted. The dependent claims are directed to preferred embodiments of the invention.

The present invention includes a plurality of means for solving the problems mentioned above, and a representative example includes a first power storage device connected to a power grid or a load device through an inverter, and/or a second power storage device connected to the power grid or the load device through an inverter and capable of changing with a larger level of charge/discharge power than the first power storage device, and/or a control device that instructs the first power storage device to charge or discharge with first power based on a charge/discharge command with respect to the power grid and/or the load device and instructs the second power storage device to charge or discharge with second power corresponding to a difference between the charge/discharge command and the first power at a shorter time period compared to the instruction to the first power storage device.

According to the present invention, appropriate charge/discharge control can be performed by combining a plurality of power storage devices to make full use of the capabilities of the respective power storage devices.

The problems, configurations, and effects other than those described above will be clarified from the description of the embodiments below.

### BRIEF DESCRIPTION OF THE DRAWINGS

Fig. 1 is a configuration diagram illustrating a composite power storage system according to an embodiment of the present invention.
Fig. 2 is a block diagram illustrating a hardware configuration example of a control device according to an embodiment of the present invention.
Fig. 3 is a flowchart illustrating control processing of a capacity-type power storage device according to an embodiment of the present invention.
Fig. 4 is a flowchart illustrating control processing of a power-type power storage device according to an embodiment of the present invention.
Fig. 5 is a characteristic diagram illustrating an example of a charge/discharge command and a charge/discharge pattern of a capacity-type power storage device according to an embodiment of the present invention.
Fig. 6 is a characteristic diagram illustrating a charge/discharge pattern of the power-type power storage device in addition to the charge/discharge command of the example of Fig. 5.
Fig. 7 is a characteristic diagram illustrating charge/discharge patterns (Example 1) of the capacity-type power storage device and the power-type power storage device with respect to a discharge command according to an embodiment of the present invention.
Fig. 8 is a characteristic diagram illustrating charge/discharge patterns (Example 2) of the capacity-type power storage device and the power-type power storage device with respect to the discharge command according to an embodiment of the present invention.
Fig. 9 is a characteristic diagram illustrating charge/discharge patterns (Example 3) of the capacity-type power storage device and the power-type power storage device with respect to the discharge command according to an embodiment of the present invention.
Fig. 10 is a characteristic diagram illustrating charge/discharge patterns (Example 1) of the capacity-type power storage device and the power-type power storage device with respect to a charge command according to an embodiment of the present invention.
Fig. 11 is a characteristic diagram illustrating charge/discharge patterns (Example 2) of the capacity-type power storage device and the power-type power storage device with respect to the charge command according to an embodiment of the present invention.
Fig. 12 is a characteristic diagram illustrating charge/discharge patterns (Example 3) of the capacity-type power storage device and the power-type power storage device with respect to the charge command according to an embodiment of the present invention.
Fig. 13 is a configuration diagram illustrating a composite power storage system according to a modified example of the embodiment of the present invention.

### DESCRIPTION OF EMBODIMENTS

Hereinafter, an exemplary embodiment of the present invention (hereinafter referred to as the "present example") will be described in detail with reference to the accompanying drawings.

### [1. Configuration of Composite Power Storage System]

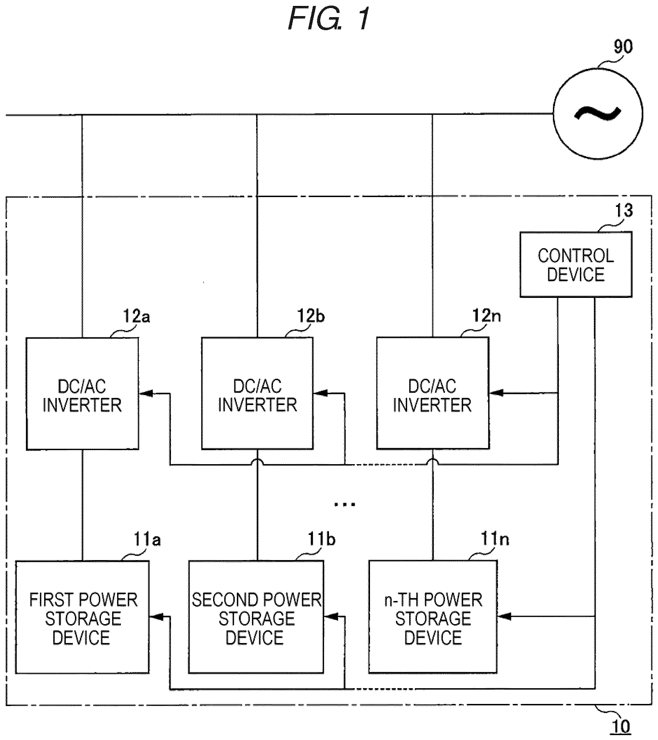

Fig. 1 illustrates an overall configuration example of a composite power storage system 10 of the present example.

The composite power storage system 10 is connected to a power grid 90. The composite power storage system 10 includes (n) power storage devices including a first power storage device 11a, a second power storage device 11b, ..., and an n-th power storage device 11n (n is an integer equal to or greater than 2). The plurality of power storage devices 11a to 11n are individually connected to the power grid 90 through DC/AC inverters 12a to 12n which are power converters.

Charging and discharging in the respective power storage devices 11a to 11n are controlled by a control device 13. In the present example, processing for individually controlling charging and discharging is performed in a state suitable for each of the power storage devices 11a to 11n. The charge/discharge command indicating the power of charging or discharging is transmitted from a monitoring device (not illustrated) of the power grid 90 to the control device 13, and the charging or discharging of each of the power storage devices 11a to 11n is controlled by the control device 13 so that the total discharge power or charge power equals the power instructed by the charge and discharge command. Details of the control of charge/discharge by the control device 13 will be described below.

While Fig. 1 illustrates an example of connecting the composite power storage system 10 to the power grid 90, the composite power storage system 10 may be connected to a load device (not illustrated) instead of the power grid 90. When the composite power storage system 10 is connected to the load device, the charge/discharge command is transmitted from the load device to the control device 13.

Some power storage devices among the plurality of power storage devices 11a to 11n are configured as capacity-type power storage devices, and the remaining power storage devices are configured as power-type power storage devices.

The capacity-type power storage device is a power storage device that uses a power storage element having a higher energy density than the power storage element included in the power-type power storage device. Examples of the power storage element included in the capacity-type power storage device include a lithium ion battery, a nickel hydrogen battery, a lead storage battery, and the like.

The power-type power storage device is a power storage device that uses a power storage element having a higher power density and that withstands relatively abrupt fluctuation in output than the power storage element included in the capacity-type power storage device. Examples of the power storage element included in the power-type power storage device include capacitors, lithium ion batteries, and the like. The capacitors include lithium ion capacitors and electric double layer capacitors.

As described above, the capacity-type power storage device and the power-type power storage device generally use power storage elements matching the respective purposes, while it is also possible to use the configuration of the power storage element having the same configuration in the capacitive type power storage device and the power-type power storage device. That is, when both the capacity-type power storage device and the power-type power storage device use the power storage device having the same configuration and characteristics, for use as the capacity-type power storage device, the control device 13 performs charge/discharge control in a way of avoiding abrupt fluctuation of the output so that the capacity of the power storage element may be effectively used. On the other hand, for use as the power-type power storage device, the control device 13 performs the charge/discharge control that allows abrupt fluctuation of the charge/discharge power. However, when the power storage element having the same characteristics is set to the capacitive type and the power type by changing the charge/discharge control, there is a possibility that the power storage element used as the power type deteriorates more quickly than the power storage element used as the capacitive type.

### [2. Hardware Configuration Example]

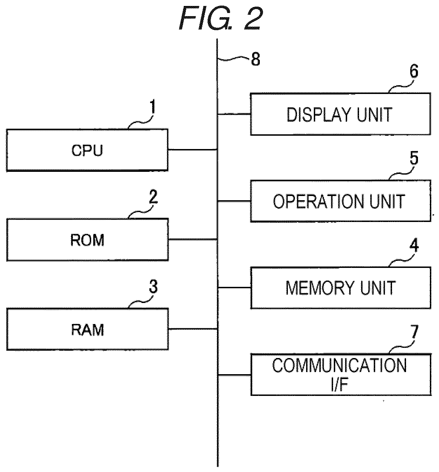

Fig. 2 illustrates an example of the hardware configuration when the control device 13 is configured with a computer.

The computer illustrated in Fig. 2 includes Control Processing Unit (CPU) 1, Read Only Memory (ROM) 2, and Random Access Memory (RAM) 3 connected to a bus 8, respectively. Further, the computer includes a memory unit 4, an operation unit 5, a display unit 6, and a communication interface 7.

The CPU 1 is an arithmetic processing unit that reads out program codes of software for realizing the function to be executed by the control device 13 from the ROM 2 and executes the same.

The RAM 3 is where the variables, parameters, and the like that are generated during the arithmetic processing are temporarily written. The execution of the control processing by the control device 13 is mainly realized by the CPU 1 executing the program codes.

For example, a keyboard, a mouse, and the like are used as the operation unit 5, and an operator performs a predetermined input using the operation unit 5.

The display unit 6 is a liquid crystal display monitor, for example, and displays the operator the result of the control processing executed by the computer. Note that Fig. 2 illustrates the computer including the operation unit 5 and the display unit 6 by way of an example, and the computer according to the present example may be configured so as not to have either or both of the operation unit 5 and the display unit 6.

The memory unit 4 includes a large-capacity data storage medium such as Hard Disk Drive (HDD) or Solid State Drive (SSD), for example. The memory unit 4 is where the program for performing control processing, charge/discharge history of each of the power storage devices 11a to 11n, and the like are recorded.

As the communication interface 7, Network Interface Card (NIC), and the like are used, for example. The communication interface 7 transmits and receives various types of data to and from the outside through a local area network (LAN) to which terminals are connected, a dedicated line, and the like. For example, the communication interface 7 receives the charge/discharge command transmitted from the monitoring device of the power grid 90.

The configuration of the control device 13 with a computer is merely an example, and accordingly, a configuration with a device other than the computer can be considered. For example, some or all of the functions performed by the control device 13 may be realized by hardware such as field programmable gate array (FPGA) or application specific integrated circuit (ASIC) .

In addition, instead of centralized control of a plurality of power storage devices 11a to 11n by one control device 13, a separate control device may be provided for each of the power storage devices 11a to 11n so that the individual control devices may cooperate with each other to perform distributed control.

### [3. Charge/Discharge Control Processing]

Next, processing in the control device 13 for controlling charge/discharge of each of the power storage devices 11a to 11n will be described.

Here, for simplicity of explanation, it is assumed that the composite power storage system 10 includes a first power storage device 11a and a second power storage device 11b, with the first power storage device 11a being a capacity-type power storage device, and the second power storage device 11b being a power-type power storage device.

First, the control device 13 sets a time period Ta for controlling the first power storage device 11a (capacity-type power storage device) and a time period Tb for controlling the second power storage device 11b (power-type power storage device) . The time period Ta for controlling the first power storage device 11a is set to a relatively long time period that ranges from several minutes to several tens of minutes (for example, about 30 minutes), for example. Therefore, the charge power and the discharge power of the first power storage device 11a are changed in a pulse-like pattern that changes in every time period Ta.

In addition, the time period Tb for controlling the second power storage device 11b is set to a time period shorter than the time period Ta for controlling the first power storage device 11a, for example, to a short time period such as 1 minute or several tens of seconds. The time period Tb for controlling the second power storage device 11b may be configured to coincide with the time period at which the charge/discharge command is transmitted from the outside (from the power grid 90). Alternatively, when the charge/discharge command is transmitted from the outside occasionally and irregularly, the timing at which the charge/discharge command is received may be set to a timing at which the time period Tb has elapsed. That is, the time period Tb may not be necessarily a constant time period of equal intervals, and may be any time period as long as it is a time period sufficiently shorter than the time period Ta. When the time period Tb has a certain time such as 1 minute, the charge power and the discharge power of the second power storage device 11b are also changed in a pulse-like pattern that changes in every time period Tb, but when the time period Tb is a relatively short time period such as several seconds, the power is changed substantially continuously.

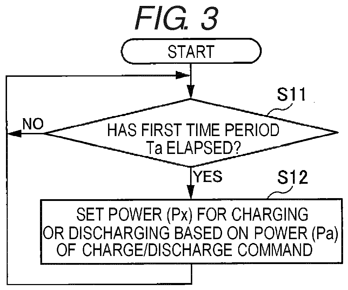

Fig. 3 is a flowchart illustrating a control processing of the first power storage device 11a (capacity-type power storage device).

The control device 13 determines whether or not the time period Ta has elapsed since the charge/discharge power of the first power storage device 11a is previously set (step S11). Here, when the time corresponding to the time period Ta is not reached (No in step S11), the control device 13 repeats the determination in step S11.

Then, when it is determined in step S11 that the time period Ta is reached (Yes in step S11), the control device 13 sets the power (Px) for charging or discharging the first power storage device 11a based on the power (Pa) of the charge/discharge command instructed from the outside (step S12). The control device 13 instructs the first power storage device 11a to charge or discharge with the set power (Px), and returns to the determination of step S11.

The power (Pa) instructed by the charge/discharge command and the power (Px) of the charge or discharge executed in the first power storage device 11a may be set to the same power value, but may be changed based on the state of charge (SOC) of the first power storage device 11a at that time. For example, when the instructed power (Pa) is discharge power, and when the state of charge (SOC) of the first power storage device 11a is low and the state of charge (SOC) of the second power storage device 11b is high, the control device 13 sets the discharge power (Px) to be less than the instructed power (Pa). Conversely, the control device 13 may set the discharge power (Px) to be greater than the instructed power (Pa).

Even when the instructed power (Pa) is the charge power, the control device 13 may set the charge power (Px) to be less than the instructed power (Pa) and may set the charge power (Px) to be greater than the instructed power (Pa).

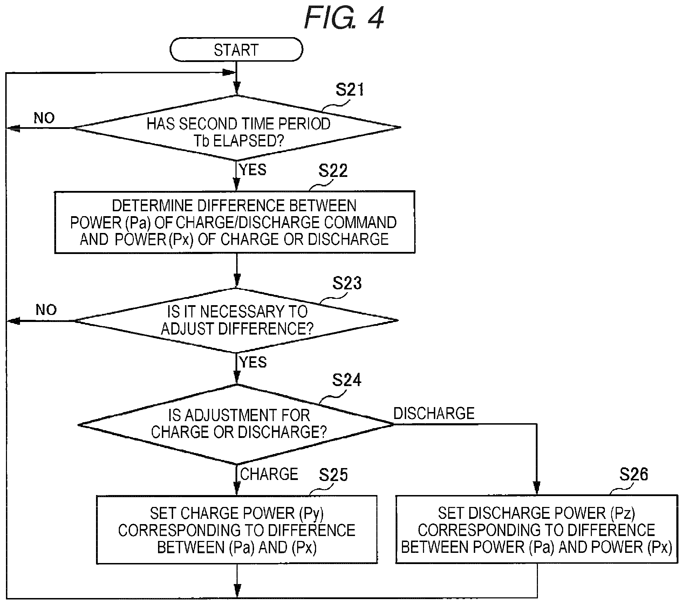

Fig. 4 is a flowchart illustrating control processing of the second power storage device 11b (power-type power storage device).

The control device 13 determines whether or not the time period Tb has elapsed since the charge/discharge power of the second power storage device 11b is previously set (step S21) . As described above, the time period Tb for controlling the second power storage device 11b is shorter than the time period Ta for controlling the first power storage device 11a.

Here, when the time corresponding to the time period Tb is not reached (No in step S21), the control device 13 repeats the determination of step S21.

When it is determined in step S21 that the time period Tb is reached (Yes in step S21), the control device 13 determines a degree of difference between the power (Pa) of the current charge/discharge command instructed from the outside and the power (Px) of the charge or discharge of the first power storage device 11a that is currently set (step S22) .

Here, the control device 13 determines whether or not the determined difference exceeds a preset threshold value and whether or not it is necessary to adjust the difference (step S23). When the determination of step S23 indicates that it is not necessary to adjust the difference (No in step S23), the control device 13 returns to the determination of step S21 without instructing the second power storage device 11b to perform the charge/discharge.

On the other hand, when it is determined that the adjustment of the difference is necessary in step S23 (Yes in step S23), the control device 13 determines whether the adjustment of the difference is for charge or discharge (step S24) .

Here, when it is determined that adjustment for charge is necessary (to [CHARGE] in step S24), the control device 13 instructs the second power storage device 11b with the charge power (Py) that corresponds to a difference between the power (Pa) of the charge/discharge command and the power (Px) being executed by the first power storage device 11a (step S25).

In addition, in step S24, when it is determined that adjustment for discharge is necessary (to [DISCHARGE] in step S24), the control device 13 instructs the second power storage device 11b with the discharge power (Py) that corresponds to a difference between the power (Pa) of the charge/discharge command and the power (Px) being executed in the first power storage device 11a (step S26).

The control device 13 instructs the second power storage device 11b to charge or discharge according to the instruction of step S25 or S26, and then returns to the determination of step S21.

### [4. Example of Charge/Discharge Control]

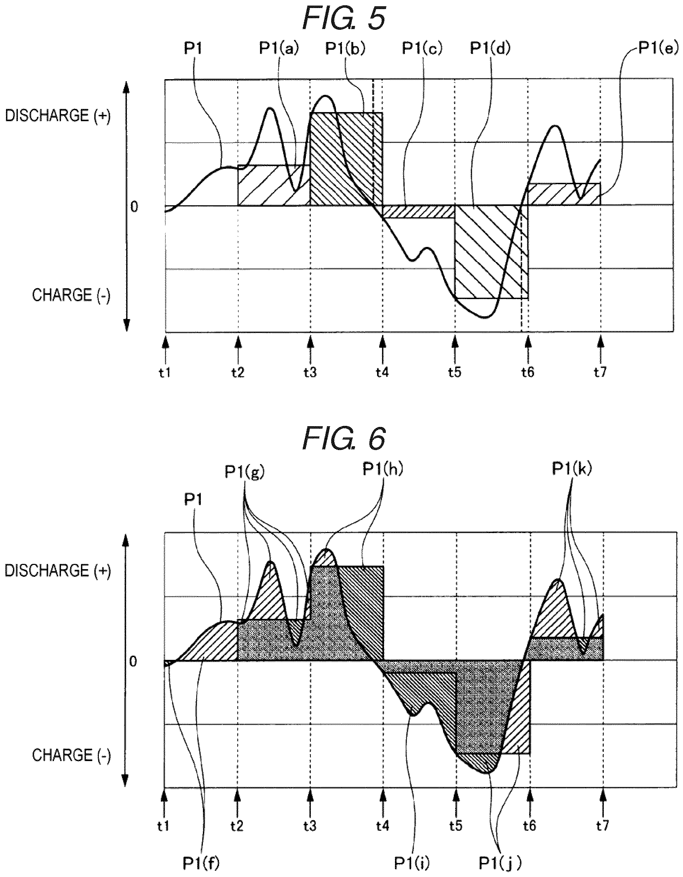

Next, a specific example of charge/discharge control will be described with reference to Figs. 5 to 12.

Fig. 5 illustrates a state in which charge/discharge of the first power storage device 11a (capacity-type power storage device) is set based on the charge/discharge command P1 input from the outside.

Fig. 6 illustrates a state in which charge/discharge of the second power storage device 11b (power-type power storage device) is further set, in the state in which the charge/discharge of the first power storage device 11a are set as illustrated in Fig. 5.

In Figs. 5 and 6, the horizontal axis represents time and the vertical axis represents the power value of discharge ((+) direction) or the power value of charge ((-) direction). Timings t1, t2, t3, ... illustrated in Fig. 5 are timings for setting the charge/discharge power of the first power storage device 11a, that are reached in each time period Ta.

First, the charge/discharge of the first power storage device 11a will be described with reference to Fig. 5. As illustrated in Fig. 5, the power indicated by the charge/discharge command P1 is changed occasionally between the discharge state and the charge state.

In the example of Fig. 5, the control device 13 instructs the first power storage device 11a to discharge a predetermined power value P1(a) at the timing t2 and then instructs to discharge a larger power value P1(b) at the timing t3 that follows. Further, the control device 13 instructs the first power storage device 11a to charge a power value P1(c) at the timing t4, instructs to charge a power value P1 (d) at the timing t5, and instructs to discharge a power value P1 (e) at the timing t6.

As described above, the charge/discharge power of the first power storage device 11a varies according to the changes in the charge/discharge command P1 input from the outside, but the charge/discharge power of the first power storage device 11a is controlled with a relatively coarse time period (for example, controlled at a time period of 30 minutes) for each time period Ta.

Next, charge/discharge of the second power storage device 11b will be described with reference to Fig. 6.

In the example of Fig. 6, during the period from the timing t1 to the timing t2, the control device 13 instructs the second power storage device 11b to charge or discharge power P1(f) that changes with a short time period to follow the instructed power value P1.

In addition, in the period from the timing t2 to the timing t3, the control device 13 instructs the second power storage device 11b to charge or discharge the power P1(g) that corresponds to a difference between the instructed power value P1 and the discharge power P1(a).

Then, in the period from the timing t3 to the timing t4, the control device 13 instructs the second power storage device 11b to charge or discharge the power P1(h) that corresponds to the difference between the instructed power value P1 and the discharge power P1(a). Likewise, in the period from the timing t4 to the timing t5, an instruction is issued to charge or discharge the power P1(i) corresponding to the difference, and in the period from the timing t5 to the timing t6, an instruction is issued to charge or discharge the power P1(j) corresponding to the difference. Further, in the period from the timing t6 to the timing t7, an instruction is issued to charge or discharge the power P1(k) corresponding to the difference.

In this way, the shortage or excess of the charge/discharge power in the first power storage device 11a, which is the capacity-type power storage device, is corrected by using the second power storage device 11b, which is the power-type power storage device, and charge or discharge is performed following the changes in the power value P1 for the entire power grid 90.

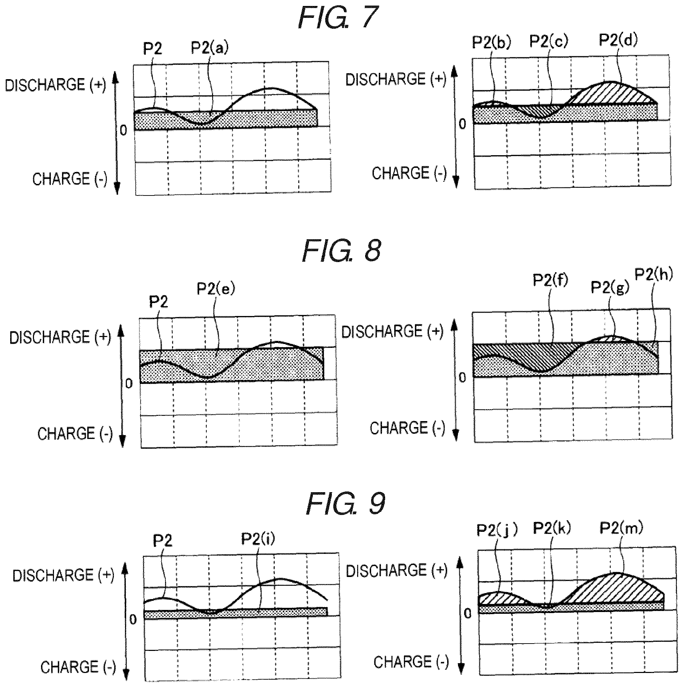

Here, an example of the relationship between the first power storage device 11a (capacity-type power storage device) and the second power storage device 11b (power-type power storage device) when the command supplied from the outside to the control device 13 is a discharge command, will be described with reference to Figs. 7 to 9.

In Figs. 7 to 9, the characteristic diagram on the left-hand side illustrates the power discharged by the first power storage device 11a, the characteristic diagram on the right-hand side illustrates the power discharged by the first power storage device 11a added with the power charged/discharged by the second power storage device 11b. In Figs. 7 to 9, the power discharged by the first power storage device 11a is constant and a state within one time period Ta for setting charge/discharge power is illustrated. The vertical axis of each characteristic diagram represents charge power or discharge power, and the horizontal axis represents time.

Fig. 7 illustrates an example (Example 1) of the states of the two power storage devices 11a and 11b when power P2 is generated based on the discharge command.

In the example of Fig. 7, as illustrated on the left-hand side of Fig. 7, the discharge power P2(a) of the first power storage device 11a substantially coincides with the value of the power P2 at the time when the discharge power P2 (a) is set. The discharge power P2(a) is maintained until the next timing at which the power supply value is changed.

In this case, as illustrated on the right-hand side of Fig. 7, the second power storage device 11b generates discharge power P2(b) as the discharge power P2 increases, generates charge power P2(c) as the subsequent discharge power P2 decreases, and also generates discharge power P2(d) as the discharge power P2 increases.

Fig. 8 illustrates an example (Example 2) of the states of the two power storage devices 11a and 11b when the power P2 is generated based on the discharge command.

In the example of Fig. 8, as illustrated on the left-hand side of Fig. 8, the discharge power P2(e) of the first power storage device 11a is set to a power value greater than the value of the power P2 at the time when the discharge power P2 (e) is set. The discharge power P2 (e) is maintained until the next timing at which the power supply value is changed.

In this case, as illustrated on the right-hand side of Fig. 8, the second power storage device 11b generates charge power P2 (f) and adjusts the total power to equal the discharge power P2. Then, the second power storage device 11b generates discharge power P2(g) as the discharge power P2 subsequently increases, and further generates a charge power P2(h) as the discharge power P2 decreases.

Fig. 9 illustrates an example (Example 3) of the states of the two power storage devices 11a and 11b when the power P2 is generated based on the discharge command.

In the example of Fig. 9, as illustrated on the left-hand side of Fig. 9, the discharge power P2(i) of the first power storage device 11a is set to a power value less than the value of the power P2 at the time when the discharge power P2(i) is set. The discharge power P2 (i) is maintained until the next timing at which the power supply value is changed.

In this case, as illustrated on the right-hand side of Fig. 9, the second power storage device 11b generates discharge power P2 (j) and switches to generate charge power P2(k) as the power P2 subsequently decreases. Further, switching is performed to generate discharge power P2(m) as the power P2 subsequently increases.

In the three examples illustrated in Figs. 7 to 9, while the discharge power P2 to the power grid 90 is same, the changes in the state of charge (SOC) of the two power storage devices 11a and 11b are different from each other. That is, in the case of Example 2 illustrated in Fig. 8, the state of charge (SOC) is changed in an increasing direction as compared with Example 1 illustrated in Fig. 7. On the other hand, in the case of Example 3 illustrated in Fig. 9, the state of charge (SOC) changes in a decreasing direction as compared with Example 1 illustrated in Fig. 7.

Therefore, when determining the discharge power of the first power storage device 11a (P2(a), P2(e), P2(i) in Figs. 7 to 9), it is preferable that the control device 13 selects one of these based on the state of charge (SOC) of the power storage device 11a at that time, for example.

Specifically, the control device 13 calculates a coefficient value that varies based on the state of charge (SOC) of the first power storage device 11a (capacity-type power storage device). The coefficient value is decreased to be set to a value less than 1 according to the state of charge when the state of charge (SOC) is of a high value, and is increased to be set to a value equal to or greater than 1 according to the state of charge (SOC) when the state of charge (SOC) is of a low value. Then, the value of the instructed discharge power P2 is multiplied by the calculated coefficient value to set the discharge power of the power storage device 11a.

In addition, the coefficient value to be multiplied for setting the discharge power of the power storage device 11a may be configured to be varied based on the state of charge (SOC) of the second power storage device 11b (power-type power storage device). That is, when the state of charge (SOC) of the second power storage device 11b is large, the coefficient value may be set to decrease the output of the first power storage device 11a, and when the state of charge (SOC) of the second power storage device 11b is small, the coefficient value may be set to increase the output of the first power storage device 11a.

Further, the coefficient value may be changed by both of the state of charge (SOC) of the first power storage device 11a and the state of charge (SOC) of the second power storage device 11b.

In this way, either or both of the state of charge (SOC) of the first power storage device 11a and the state of charge (SOC) of the second power storage device 11b may be controlled to be within the ranges suitable for the respective power storage devices 11a and 11b.

While it is described herein that the power P2 instructed from the outside indicates the example of the discharge command, the same goes for the example where the instruction from the outside is for the charge command.

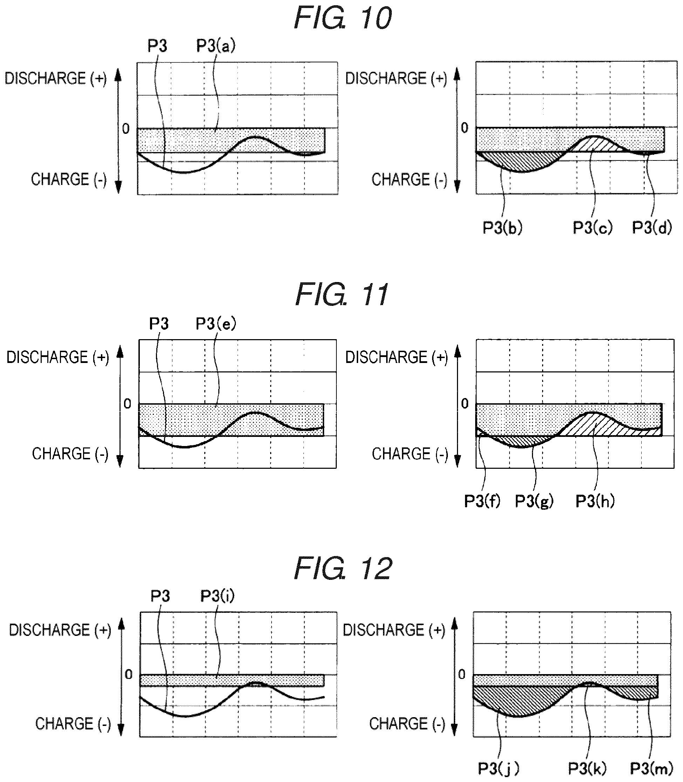

Hereinafter, examples (Example 1, Example 2, and Example 3) of the relationship between the first power storage device 11a (capacity-type power storage device) and the second power storage device 11b (power-type power storage device) when the command supplied from the outside to the control device 13 is the charge command, will be described with reference to Figs. 10 to 12. In Figs. 10 to 12, the characteristic diagram on the left-hand side illustrates the power charged by the first power storage device 11a, the characteristic diagram on the right-hand side illustrates the power charged by the first power storage device 11a added with the power charged/discharged by the second power storage device 11b. In Figs. 10 to 12, the power charged by the first power storage device 11a is constant and a state within one time period Ta for setting charge/discharge power is illustrated. The vertical axis of each characteristic diagram represents charge power or discharge power, and the horizontal axis represents time.

Fig. 10 illustrates an example (Example 1) of the states of the two power storage devices 11a and 11b when the power P3 is generated based on the charge command.

In the example of Fig. 10, as illustrated on the left-hand side of Fig. 10, the charge power P3(a) of the first power storage device 11a substantially coincides with the value of the power P3 at the time when the charge power P3(a) is set. The charge power P3(a) is maintained until the next timing at which the power supply value is changed.

In this case, as illustrated on the right-hand side of Fig. 10, the second power storage device 11b generates charge power P3 (b) as the charge power P3 increases, generates discharge power P3(c) as the charge power P3 subsequently decreases, and then generates charge power P3 (d) as the charged amount of the power P3 subsequently increases.

Fig. 11 illustrates an example (Example 2) of the states of the two power storage devices 11a and 11b when the power P3 is generated based on the charge command.

In the example of Fig. 11, as illustrated on the left-hand side of Fig. 11, the charge power P3(e) of the first power storage device 11a is set to a power value greater than the power P3 at the time when the charge power P3 (e) is set (large value on the minus side in the drawing) . The charge power P3 (e) is maintained until the next timing at which the power supply value is changed.

In this case, as illustrated on the right-hand side of Fig. 11, the second power storage device 11b generates discharge power P3(f), generates charge power P3(g) as the charge power value of the charge power P3 subsequently increases, and also generates discharge power P3(h) as the charge power P3 decreases.

Fig. 12 illustrates an example (Example 3) of the states of the two power storage devices 11a and 11b when the power P3 is generated based on the charge command.

In the example of Fig. 12, as illustrated on the left-hand side of Fig. 12, the charge power P3(i) of the first power storage device 11a is set to a power value smaller than the value of the charge power P3 at the time when the charge power P3(i) is set. The charge power P3(i) is maintained until the next timing at which the power supply value is changed.

In this case, as illustrated on the right-hand side of Fig. 12, the second power storage device 11b generates charge power P3(j), generates discharge power P3(k) as the subsequent discharge power P3 decreases, and also generates charge power P3(m) as the charge power P3 increases.

Even in the case of the charge power illustrated in Figs. 10 to 12, like the case of the discharge power, a coefficient value is calculated from either or both of the state of charge (SOC) of the first power storage device 11a (capacity-type power storage device) and the state of charge (SOC) of the second power storage device 11b (power-type power storage device). Then, by multiplying the calculated coefficient value, it is possible to set the optimum charge power of the first power storage device 11a.

By performing such control, for example, it is possible to operate the system stably in the vicinity of 50% of the state of charge (SOC) of the second power storage device 11b (power-type power storage device), thereby improving the operation rate of the system and extending the service life of the power storage device by reducing the depth of charge.

As described above, with the composite power storage system 10 according to the present example, it is possible to increase the maximum output of the power storage system without changing the system configuration. Further, since it is possible to control an amount of the charge/discharge of the power storage device irrespective of the charge/discharge command by setting the charge/discharge directions of the plurality of power storage devices in different directions, the state of charge (SOC) of the power storage device can be stabilized. In addition, since the state of charge (SOC) is stabilized, it is expected that the facility utilization rate of the power storage device is improved, and the service life of the power storage device is extended. Furthermore, since all the power storage devices may operate irrespective of the state of charge (SOC) of the other power storage devices, there is an effect that the problem of lowered facility utilization rate of the entire system is prevented.

### [5. Example Of Combination With Other Power Storage Systems]

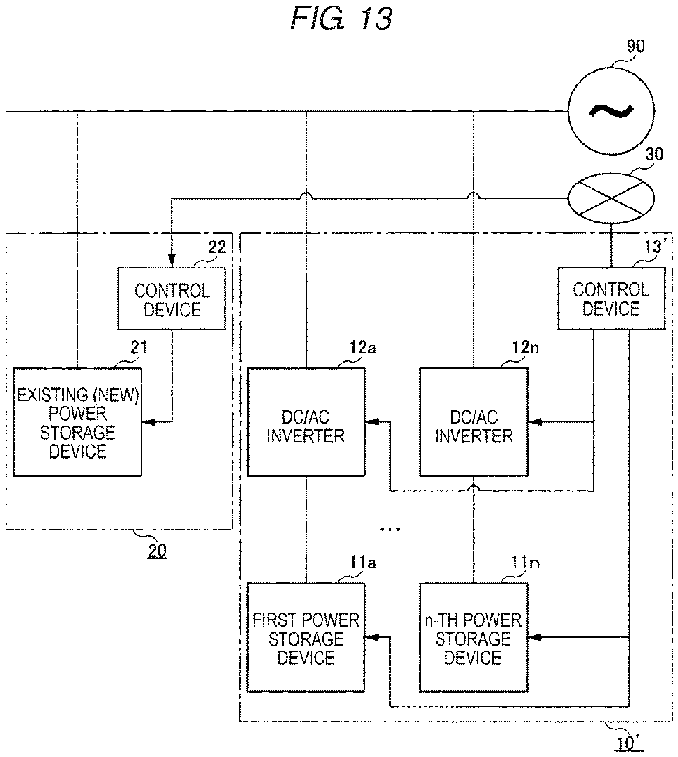

Next, an example of a case where the composite power storage system of the present example is configured in combination with other power storage systems will be described with reference to Fig. 13.

In the configuration illustrated in Fig. 13, unlike the composite power storage system 10 illustrated in Fig. 1, there is an existing or new power storage system 20 separate from a composite power storage system 10'. The composite power storage system 10' and the power storage system 20 are individually connected to the power grid 90.

In the composite power storage system 10', the configuration of the power storage devices 11a to 11n is the same as those of the composite power storage system 10 illustrated in Fig. 1. The difference from the configuration of Fig. 1 is that the control device 13' for controlling charge/discharge in these power storage devices 11a to 11n is in communication with the existing (or new) power storage system 20 side.

The existing (or new) power storage system 20 includes a power storage device 21 and a control device 22 for controlling the power storage device 21. The power storage device 21 includes a power storage element (secondary battery, capacitor, and the like) and a DC/AC inverter, and discharge and charge with respect to the power grid 90 under the control of the control device 22.

The control device 22 of the power storage system 20 communicates with the control device 13' on the composite power storage system 10' side through a network 30. In the present example, the control device 22 performs charge/discharge in the power storage device 21 according to an instruction from the control device 13'.

With such a configuration, the control device 13' may control the existing (or new) power storage system 20 as one of a plurality of parallel connected power storage devices. In this case, the existing (or new) power storage system 20 operates as one of the capacity-type power storage device and the power-type power storage device according to the configuration of the power storage device 21.

Therefore, the charge/discharge with respect to the power grid 90 (or load device) may be performed in a distributed manner by a plurality of power storage systems in cooperation with each other. For example, by operating the existing power storage system 20 as a capacity-type power storage device, it is possible to stabilize the power storage system including the existing power storage system 20 as a whole, increase the output thereof, and the like.

Instead of the existing power storage system 20, a power generator may be connected to the power grid 90, and the output of the power generator may be controlled by the control device 13'. For example, the power generator (for example, diesel power generator) instead of the power storage system 20 is connected to the power grid 90 to obtain a power generation output (corresponding to the discharge power of the power storage device) that changes stepwise at a constant time period, as in the case of the capacity-type power storage device. The power generation output of the power generator is controlled by the control device 13'. Then, the power storage devices 11a to 11n on the composite power storage system 10' side are controlled by the control device 13' to operate as power-type power storage devices. With such a configuration, it is possible to improve the charge/discharge efficiency in the power storage devices 11a to 11n on the composite power storage system 10' side.

### [6. Modified Example]

It should be noted that the present invention is not limited to the embodiments described above, but includes various modified examples.

For example, in the charge/discharge states illustrated in Figs. 5 and 6, the charge/discharge state of one capacity-type power storage device and the charge/discharge state of one power-type power storage device are combined as an example. On the other hand, when three or more of the power storage devices 11a to 11n are included, the control device 13 may control the respective power storage devices more finely, according to the number of the capacity-type power storage devices and the power-type power storage devices. For example, in the case where there are a plurality of power-type power storage devices, charge may be performed by another power-type power storage device during discharge by any one of the plurality of power-type power storage devices. Likewise, in the case where there are a plurality of capacity-type power storage devices, charge/discharge may be combined.

It should be noted that the embodiment described above is described in detail in order to explain the present invention in an easy-to-understand manner, and is not necessarily limited to the one having all the configurations described above. In the configuration diagrams and functional block diagrams of Fig. 1 and the like, the control lines and the information lines illustrate only those considered to be necessary for explanation, and it is not necessarily limited that all the control lines and information lines are illustrated on the product. In practice, it may be considered that almost all the configurations are mutually connected. Further, in the flowcharts illustrated in Figs. 3 and 4, the execution order of some processing steps may be changed or some processing steps may be executed at the same time within a range that does not affect the processing result of the embodiment example.

## Claims

1. A composite power storage system, comprising:
a first power storage device (11a) connected to a power grid (90) or a load device through an inverter;
a second power storage device (11b) connected to the power grid (90) or the load device through an inverter and having a higher power density adapted to withstand abrupt fluctuation in output than the first power storage device (11a); and
a first control device (13) adapted to instruct the first power storage device (11a) to charge or discharge with first power based on a charge/discharge command with respect to the power grid (90) or the load device, and to instruct the second power storage device (11b) to charge or discharge with second power corresponding to a difference between the charge/discharge command and the first power at a shorter time period compared to the instruction to the first power storage device (11a),
**characterized in that**:
the first control device (13) is adapted to instruct the first power storage device (11a) to charge or discharge with the first power in every first time period, and to instruct the second power storage device (11b) to charge or discharge with the second power in every second time period shorter than the first time period.

2. The composite power storage system according to claim 1, wherein the first control device (13) is adapted to individually set a direction in which the first power storage device (11a) performs charge or discharge with the first power and a direction in which the second power storage device (11b) performs charge or discharge with the second power, based on a difference between the charge/discharge command and the first power, such that a sum of charge power or discharge power of the first power storage device (11a) and charge power or discharge power of the second power storage device (11b) equals power instructed by the charge/discharge command.

3. The composite power storage system according to claim 2, wherein, when the charge/discharge command is a charge command, the first control device (13) is adapted to instruct the first power storage device (11a) to charge with the first power that is power greater than the power instructed by the charge command, and to instruct the second power storage device (11b) to discharge with the second power that corresponds to a difference between the power instructed by the charge command and the first power.

4. The composite power storage system according to claim 2, wherein, when the charge/discharge command is a discharge command, the first control device (13) is adapted to instruct the first power storage device (11a) to discharge with the first power that is power greater than the power instructed by the charge command, and to instruct the second power storage device (11b) to charge with the second power that corresponds to the difference between the power instructed by the charge command and the first power.

5. The composite power storage system according to any one of claims 1 to 4, wherein the first control device (13) is adapted to control one or both of state of charge of the first power storage device (11a) and state of charge of the second power storage device (11b) to be within a range suitable for each power storage device by individually setting a direction in which the first power storage device (11a) performs charge or discharge with the first power and a direction in which the second power storage device (11b) performs charge or discharge with the second power.

6. The composite power storage system according to claim 1, further comprising:
a second control device (13') for controlling the first power storage device (11a) or the second power storage device (11b), wherein
the first control device (13) is adapted to instruct the second control device (13') to charge or discharge with the first or second power based on the charge/discharge command.

7. A power storage method of controlling a first power storage device (11a) connected to a power grid (90) or a load device through an inverter and a second power storage device (11b) connected to the power grid (90) or the load device through an inverter and having a higher power density adapted to withstand abrupt fluctuation in output than the first power storage device (11a), the method comprising:
a first control processing for instructing the first power storage device (11a) to charge or discharge with first power based on a charge/discharge command with respect to the power grid (90) or the load device; and
a second control processing for instructing the second power storage device (11b) to charge or discharge with second power that corresponds to a difference between the charge/discharge command and the first power at a shorter time period compared to the instruction to the first power storage device (11a),
**characterized in that**:
the first power storage device (11a) is instructed to charge or discharge with the first power in every first time period, and the second power storage device (11b) is instructed to charge or discharge with the second power in every second time period shorter than the first time period.

## Patentansprüche

1. Kombiniertes Energiespeicherungssystem, das Folgendes umfasst:
eine erste Energiespeichervorrichtung (11a), die durch einen Wechselrichter mit einem Stromnetz (90) oder einer Lastvorrichtung verbunden ist;
eine zweite Energiespeichervorrichtung (11b), die durch einen Wechselrichter mit dem Stromnetz (90) oder der Lastvorrichtung verbunden ist und eine höhere Energiedichte, die dafür ausgelegt ist, einer abrupten Schwankung in der Abgabe standzuhalten, als die erste Energiespeichervorrichtung (11a) aufweist; und
eine erste Steuervorrichtung (13), die dafür ausgelegt ist, die erste Energiespeichervorrichtung (11a) anzuweisen, basierend auf einem Lade- bzw. Entladebefehl bezüglich des Stromnetzes (90) oder der Lastvorrichtung mit einer ersten Energie zu laden oder zu entladen, und die zweite Energiespeichervorrichtung (11b) anzuweisen, mit der zweiten Energie, die einer Differenz zwischen dem Lade- bzw. Entladebefehl und der ersten Energie entspricht, in einer kürzeren Zeitdauer im Vergleich zu der Anweisung an die erste Energiespeichervorrichtung (11a) zu laden oder zu entladen,
**dadurch gekennzeichnet, dass**:
die erste Steuervorrichtung (13) dafür ausgelegt ist, die erste Energiespeichervorrichtung (11a) anzuweisen, in jeder ersten Zeitdauer mit der ersten Energie zu laden oder zu entladen, und die zweite Energiespeichervorrichtung (11b) anzuweisen, in jeder zweiten Zeitdauer, die kürzer ist als die erste Zeitdauer, mit der zweiten Energie zu laden oder zu entladen.

2. Kombiniertes Energiespeicherungssystem nach Anspruch 1, wobei die erste Steuervorrichtung (13) dafür ausgelegt ist, eine Richtung, in der die erste Energiespeichervorrichtung (11a) ein Laden oder Entladen mit der ersten Energie durchführt, und eine Richtung, in der die zweite Energiespeichervorrichtung (11b) ein Laden oder Entladen mit der zweiten Energie durchführt, basierend auf einer Differenz zwischen dem Lade- bzw. Entladebefehl und der ersten Energie individuell einzustellen, so dass eine Summe von Ladeenergie oder Entladeenergie der ersten Energiespeichervorrichtung (11a) und Ladeenergie oder Entladeenergie der zweiten Energiespeichervorrichtung (11b) die Energie, die durch den Lade- bzw. Entladebefehl angewiesen worden ist, ergibt.

3. Kombiniertes Energiespeicherungssystem nach Anspruch 2, wobei dann, wenn der Lade- bzw. Entladebefehl ein Ladebefehl ist, die erste Steuervorrichtung (13) dafür ausgelegt ist, die erste Energiespeichervorrichtung (11a) anzuweisen, mit der ersten Energie, die eine Energie ist, die größer ist als die Energie, die durch den Ladebefehl angewiesen worden ist, zu laden, und die zweite Energiespeichervorrichtung (11b) anzuweisen, mit der zweiten Energie, die einer Differenz zwischen der Energie, die von dem Ladebefehl angewiesen worden ist, und der ersten Energie entspricht, zu laden.

4. Kombiniertes Energiespeicherungssystem nach Anspruch 2, wobei dann, wenn der Lade- bzw. Entladebefehl ein Entladebefehl ist, die erste Steuervorrichtung (13) dafür ausgelegt ist, die erste Energiespeichervorrichtung (11a) anzuweisen, mit der ersten Energie, die eine Energie ist, die größer ist als die Energie, die durch den Ladebefehl angewiesen worden ist, zu entladen, und die zweite Energiespeichervorrichtung (11b) anzuweisen, mit der zweiten Energie, die der Differenz zwischen der Energie, die von dem Ladebefehl angewiesen worden ist, und der ersten Energie entspricht, zu laden.

5. Kombiniertes Energiespeicherungssystem nach einem der Ansprüche 1 bis 4, wobei die erste Steuervorrichtung (13) dafür ausgelegt ist, den Ladezustand der ersten Energiespeichervorrichtung (11a) und/oder den Ladezustand der zweiten Energiespeichervorrichtung (11b) derart zu steuern, dass sie in einem Bereich liegen, der für jede Energiespeichervorrichtung geeignet ist, indem sie eine Richtung, in der die erste Energiespeichervorrichtung (11a) ein Laden oder Entladen mit der ersten Energie durchführt, und eine Richtung, in der die zweite Energiespeichervorrichtung (11b) das Laden oder Entladen mit der zweiten Energie durchführt, individuell einstellt.

6. Kombiniertes Energiespeicherungssystem nach Anspruch 1, das ferner Folgendes umfasst:
eine zweite Steuervorrichtung (13') zum Steuern der ersten Energiespeichervorrichtung (11a) oder der zweiten Energiespeichervorrichtung (11b), wobei
die erste Steuervorrichtung (13) dafür ausgelegt ist, die zweite Steuervorrichtung (13') anzuweisen, basierend auf dem Lade- bzw. Entladebefehl mit der ersten oder zweiten Energie zu laden oder zu entladen.

7. Energiespeicherungsverfahren zum Steuern einer ersten Energiespeichervorrichtung (11a), die durch einen Wechselrichter mit einem Stromnetz (90) oder einer Lastvorrichtung verbunden ist, und einer zweiten Energiespeichervorrichtung (11b), die durch einen Wechselrichter mit dem Stromnetz (90) oder der Lastvorrichtung verbunden ist und eine höhere Energiedichte als die erste Energiespeichervorrichtung (11a), die dafür ausgelegt ist, einer abrupten Schwankung in der Abgabe standzuhalten, aufweist, wobei das Verfahren Folgendes umfasst:
eine erste Steuerungsverarbeitung zum Anweisen der ersten Energiespeichervorrichtung (11a), basierend auf einem Lade- bzw. Entladebefehl bezüglich des Stromnetzes (90) oder der Lastvorrichtung mit einer ersten Energie zu laden oder zu entladen; und
eine zweite Steuerungsverarbeitung zum Anweisen der zweiten Energiespeichervorrichtung (11b), mit einer zweiten Energie, die einer Differenz zwischen dem Lade- bzw. Entladebefehl und der ersten Energie entspricht, in einer kürzen Zeitdauer im Vergleich zu der Anweisung an die erste Energiespeichervorrichtung (11a) zu laden oder zu entladen,
**dadurch gekennzeichnet, dass**:
die erste Energiespeichervorrichtung (11a) angewiesen wird, in jeder ersten Zeitdauer mit der ersten Energie zu laden oder zu entladen, und
die zweite Energiespeichervorrichtung (11b) angewiesen wird, in jeder zweiten Zeitdauer, die kürzer ist als die erste Zeitdauer, mit der zweiten Energie zu laden oder zu entladen.

## Revendications

1. Système composite de stockage de puissance, comprenant :
un premier dispositif de stockage de puissance (11a) connecté à un réseau de puissance (90) ou à un dispositif de charge via un convertisseur ;
un second dispositif de stockage de puissance (11b) connecté au réseau de puissance (90) ou au dispositif de charge via un convertisseur et ayant une densité de puissance plus élevée adaptée pour mieux résister à une fluctuation abrupte dans une sortie que le premier dispositif de stockage de puissance (11a) ; et
un premier dispositif de commande (13) adapté pour instruire le premier dispositif de stockage de puissance (11a) pour charger ou décharger avec une première puissance sur la base d'un ordre de chargement/déchargement par rapport au réseau de puissance (90) ou au dispositif de charge, et pour instruire le second dispositif de stockage de puissance (11b) pour charger ou décharger avec une seconde puissance correspondant à une différence entre l'ordre de chargement/déchargement et la première puissance à une période temporelle plus courte par comparaison à l'instruction au premier dispositif de stockage de puissance (11a),
**caractérisé en ce que** :
le premier dispositif de commande (13) est adapté pour instruire le premier dispositif de stockage de puissance (11a) pour charger ou décharger avec la première dans chaque première période temporelle, et pour instruire le seconde dispositif de stockage de puissance (11b) pour charger ou décharger avec la seconde puissance dans chaque seconde période temporelle plus courte que la première période temporelle.

2. Système composite de stockage de puissance selon la revendication 1, dans lequel le premier dispositif de commande (13) est adapté pour établir individuellement une direction dans laquelle le premier dispositif de stockage (11a) exécute un chargement ou un déchargement avec la première puissance et une direction dans laquelle le second dispositif de stockage de puissance (11b) exécute un chargement ou un déchargement avec la seconde puissance, sur la base d'une différence entre l'ordre de chargement/déchargement et la première puissance, de sorte qu'une somme d'une puissance de chargement ou d'une puissance de déchargement du premier dispositif de stockage de puissance (11a) et d'une puissance de chargement ou d'une puissance de déchargement du second dispositif de stockage de puissance (11b) est égale à une puissance instruite par l'ordre de chargement/déchargement.

3. Système composite de stockage de puissance selon la revendication 2, dans lequel, quand l'ordre de chargement/déchargement est un ordre de chargement, le premier dispositif de commande (13) est adapté pour instruire le premier dispositif de stockage de puissance (11a) pour charger avec la première puissance qui est une puissance supérieure à la puissance instruite par l'ordre de chargement, et pour instruire le second dispositif de stockage de puissance (11b) pour décharger avec la seconde puissance qui correspond à une différence entre la puissance instruite par l'ordre de chargement et la première puissance.

4. Système composite de stockage de puissance selon la revendication 2, dans lequel, quand l'ordre de chargement/déchargement est un ordre de déchargement, le premier dispositif de commande (13) est adapté pour instruire le premier dispositif de stockage de puissance (11a) pour décharger avec la première puissance qui est une puissance supérieure à la puissance instruite par l'ordre de chargement, et pour instruire le second dispositif de stockage de puissance (11b) pour charger avec la seconde puissance qui correspond à la différence entre la puissance instruite par l'ordre de chargement et la première puissance.

5. Système composite de stockage de puissance selon l'une quelconque des revendications 1 à 4, dans lequel le premier dispositif de commande composite (13) est adapté pour commander un état parmi l'état de chargement du premier dispositif de stockage de puissance (11a) et l'état de chargement du second dispositif de stockage de puissance (11b), ou les deux à la fois, pour être à l'intérieur d'une place convenable pour chaque dispositif de stockage de puissance en établissant individuellement une direction dans laquelle le premier dispositif de stockage de puissance (11a) exécute un chargement ou un déchargement avec la première puissance et une direction dans laquelle le second dispositif de stockage de puissance (11b) exécute un chargement ou un déchargement avec la seconde puissance.

6. Système composite de stockage de puissance selon la revendication 1, comprenant en outre :
un second dispositif de commande (13') destiné à commander le premier dispositif de stockage de puissance (11a) ou le second dispositif de stockage de puissance (11b), dans lequel
le premier dispositif de stockage de puissance (13) est adapté pour instruire le second dispositif de commande (13') pour charger ou décharger avec la première ou la seconde puissance sur la base de l'ordre de chargement/déchargement.

7. Procédé de stockage de puissance pour commander un premier dispositif de stockage de puissance (11a) connecté à un réseau de puissance (90) ou un dispositif de charge via un convertisseur et un second dispositif de stockage de puissance (11b) connecté au réseau de puissance (90) ou au dispositif de charge via un convertisseur et ayant une densité haute puissance plus élevée, adaptée pour mieux résister à une fluctuation abrupte dans une sortie que le premier dispositif de stockage de puissance (11a), le procédé comprenant les étapes suivantes :
un premier traitement de commande pour instruire le premier dispositif de stockage de puissance (11a) pour charger ou décharger avec une première puissance sur la base d'un ordre de chargement/déchargement par rapport au réseau de puissance (90) ou au dispositif de charge ; et
un second traitement de commande pour instruire le second dispositif de stockage de puissance (11b) pour charger ou décharger avec une seconde puissance qui correspond à une différence entre l'ordre de chargement/déchargement et la première puissance à une période temporelle plus courte par comparaison à l'instruction au premier dispositif de stockage de puissance (11a),
**caractérisé en ce que** :
le premier dispositif de stockage de puissance (11a) est instruit pour charger ou décharger avec la première puissance dans chaque première période temporelle, et
le second dispositif de stockage de puissance (11b) est instruit pour charger ou décharger avec la seconde puissance dans chaque seconde période temporelle plus courte que la première période temporelle.
